# FASCICULE DE BREVET EUROPEEN

(11) **EP 3 388 345 B1**
(45) Date de publication et mention de la délivrance du brevet: **26.06.2019**
(21) Numéro de dépôt: 18153350.6
(22) Date de dépôt: 25.01.2018
(51) Int. Cl.: B64D 29/00

(54) **SYSTEME DE JOINTS FEU METALLIQUES POUR UNE ATTACHE MOTEUR D'UN AERONEF**
SYSTEM MIT METALL-BRANDSCHUTZDICHTUNGEN FÜR MOTORBEFESTIGUNG EINES LUFTFAHRZEUGS
METAL FIRE JOINT SYSTEM FOR AN AIRCRAFT ENGINE MOUNT

(30) Priorité: 28.03.2017 FR 1752584
(43) Date de publication de la demande: 17.10.2018
(73) Titulaire: Airbus Operations S.A.S., 31060 Toulouse (FR)
(72) Inventeur: Cassagne, Jérôme, 31000 Toulouse (FR); Geliot, Jean, 31400 Toulouse (FR)
(74) Mandataire: Gicquel, Olivier Yves Gérard

(56) Documents cités:
- EP-A1- 2 957 794
- EP-A2- 2 543 864
- FR-A1- 3 001 197
- US-A1- 2014 026 582
- US-A1- 2014 262 358
- US-A1- 2015 048 202

## Description

La présente invention concerne un système de joints feu où les joints sont réalisés en matériaux métalliques et où le système de joints est disposé au niveau de l'attache moteur arrière d'un aéronef, ainsi qu'un aéronef comprenant un tel système de joints.

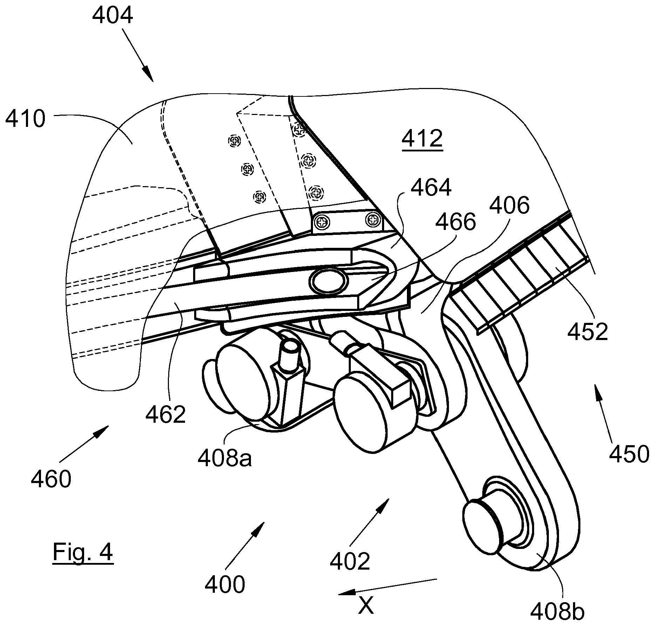

La Fig. 4 montre une zone d'accrochage 400 entre une attache moteur arrière 402 et un pylône 404 d'un aéronef de l'état de la technique.

L'attache moteur arrière 402 est agencée entre le pylône 404 et un élément structurel d'une turbomachine et permet de soutenir la turbomachine.

A cette fin, l'attache moteur arrière 402 comporte une poutre 406 solidaire du pylône 404 et des bielles 408a-b montées mobiles en rotation sur la poutre 406 et où chaque bielle 408a-b est fixée à la turbomachine.

La zone d'accrochage 400 est délimitée avec l'extérieur par un capot d'inversion de poussée 410 (vue en coupe partielle) et une porte d'accès 412 permettant l'accès à l'attache moteur arrière 402.

En cas d'incendie dans la turbomachine, il est nécessaire de prévenir une propagation des flammes vers le pylône 404 et vers l'extérieur du pylône 404. A cette fin, à l'interface entre l'attache moteur arrière 402 et le pylône 404, l'aéronef présente un premier système de joints 450 entre la porte d'accès 412 et la structure interne contre laquelle elle s'appuie et un deuxième système de joints 460 entre le capot d'inversion de poussée 410 et la structure interne contre laquelle il s'appuie.

Le premier système de joints 450 prend la forme d'une série de languettes métalliques 452 disposées les unes à la suite des autres le long d'un bord de la porte d'accès 412.

Le deuxième système de joints 460 comporte un joint longiligne 462 et un sabot 464. Le joint longiligne 462 et le sabot 464 sont réalisés dans des matériaux élastomères spécifiques et résistants au feu.

Le sabot 464 est fixé globalement sous la jonction entre la porte d'accès 412 et le capot d'inversion de poussée 410 et il est écrasé par le capot d'inversion de poussée 410 lorsque celui-ci est mis en place.

Le joint longiligne 462 court le long et sous le capot d'inversion de poussée 410 et vient se placer dans le sabot 464 qui comporte un logement 466 prévu à cet effet.

Le sabot 464 est solidaire de la structure interne et le joint longiligne 462 est solidaire du capot d'inversion de poussée 410.

Bien qu'un tel agencement donne entière satisfaction du point de vue de la sécurité, la mise en compression du sabot 464 par le capot d'inversion de poussée 410 peut entraîner des déformations de ces derniers et une usure prématurée en particulier du sabot 464. En outre, du fait des températures atteintes dans cette zone, les pièces en matériaux élastomères ont tendance à vieillir rapidement et doivent donc être régulièrement changées.

Un autre système de joints feu de l'art antérieur est connu du document US2015048202.

Un objet de la présente invention est de proposer un système de joints feu métalliques qui présente une plus grande souplesse et une meilleure tenue en température et donc une usure moindre.

A cet effet, est proposé un système de joints feu tel que revendiqué dans la revendication 1. Un système de joints feu selon l'invention permet d'assurer une barrière à la propagation de flammes voulant progresser depuis la turbomachine vers le pylône et d'absorber les mouvements de la nacelle, en particulier du fait de l'effet chicane créé par les éléments métalliques.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant un système de joints selon l'invention,
la Fig. 2 est une vue en perspective d'une zone d'accrochage avec un système de joints selon l'invention,
la Fig. 3 est une vue de dessus de la zone d'accrochage de la Fig. 2, et
la Fig. 4 est une vue en perspective d'une zone d'accrochage de l'état de la technique.

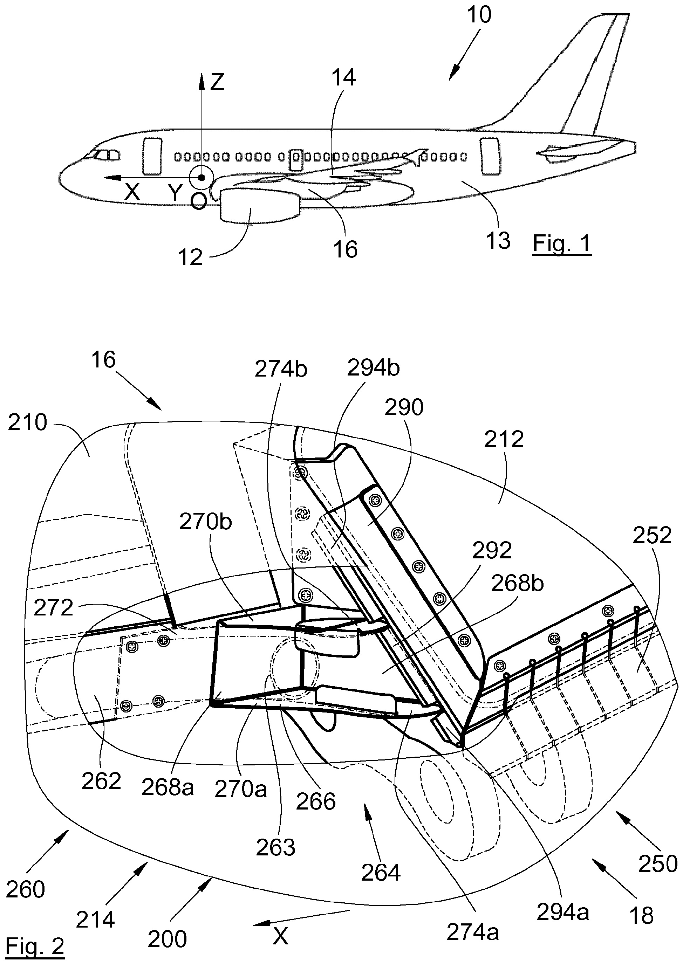

Dans la description qui suit, les termes relatifs à une position sont pris en référence à un aéronef en position d'avancement, c'est-à-dire comme il est représenté sur la Fig. 1.

La Fig. 1 montre un aéronef 10 qui présente une nacelle 12 dans laquelle est logée une turbomachine.

Dans la description qui suit, et par convention, on appelle X l'axe longitudinal de l'aéronef 10 orienté positivement dans le sens d'avancement de l'aéronef 10, on appelle Y la direction transversale qui est horizontale lorsque l'aéronef est au sol, et Z la direction verticale ou hauteur verticale lorsque l'aéronef est au sol, ces trois directions X, Y et Z étant orthogonales entre elles.

Dans le mode de réalisation de l'invention présenté sur la Fig. 1, l'aéronef 10 comporte un fuselage 13 et une aile 14 de chaque côté du fuselage 13. Sous chaque aile 14, l'aéronef 10 présente un pylône 16 qui est fixé à la structure de l'aile 14 et s'étend sous l'aile 14. Chaque pylône 16 supporte une turbomachine qui est fixée audit pylône 16 par l'intermédiaire d'une attache moteur avant et d'une attache moteur arrière.

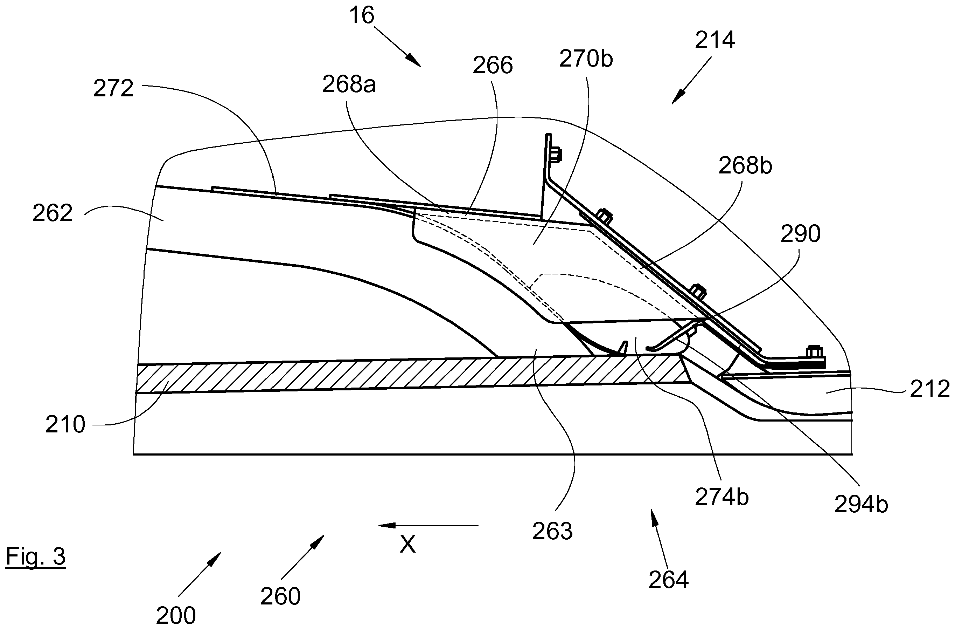

La Fig. 2 montre une zone d'accrochage 200 entre une attache moteur arrière 18 et le pylône 16 de l'aéronef 10. La Fig. 3 montre la zone d'accrochage 200 en vue de dessus.

L'attache moteur arrière 18 et la pylône 16 sont similaires à ceux de l'état de la technique et la même description s'applique ici.

Comme pour l'état de la technique, l'aéronef 10 comporte un capot d'inversion de poussée 210 (vue en coupe partielle) et une porte d'accès 212 (vue en transparence et représentée par des traits mixtes fins) permettant l'accès à l'attache moteur arrière 18. Le capot d'inversion de poussée 210 et la porte d'accès 212 forment une partie de la nacelle 12.

Le capot d'inversion de poussée 210 et la porte d'accès 212 délimitent la zone d'accrochage 200 avec l'extérieur.

Au niveau de la zone d'accrochage 200, sous la jonction entre le capot d'inversion de poussée 210 et la porte d'accès 212, la structure du pylône 16 forme un coin 214 qui est ouvert vers l'extérieur du fait d'un élargissement de la structure en aval et sous le capot d'inversion de poussée 210 et la porte d'accès 212.

Pour prévenir la propagation des flammes en cas d'incendie de la turbomachine, l'aéronef présente un premier système de joints feu 250 entre la porte d'accès 212 et la structure interne contre laquelle elle s'appuie et un système de joints feu métalliques 260 selon l'invention entre le capot d'inversion de poussée 210 et la structure interne contre laquelle il s'appuie.

Les systèmes de joints feu 250 et 260 permettent de délimiter des zones de confinement à l'intérieur de chacune desquelles un éventuel incendie reste circonscrit.

Le premier système de joints 250 est identique à celui de l'état de la technique et il prend la forme d'une série de languettes métalliques 252 disposées les unes à la suite des autres le long d'un bord de la porte d'accès 212.

Le système de joints métalliques 260 comporte un joint longiligne 262 (vue en transparence sur la Fig. 2) et un sabot métallique 264. Le joint longiligne 262 est réalisé dans des matériaux élastomères spécifiques et résistants au feu et est similaire à celui de l'état de la technique. Le joint longiligne 262 court le long et sous le capot d'inversion de poussée 210 et est solidaire du capot d'inversion de poussée 210.

La différence entre l'agencement de l'état de la technique et l'agencement selon l'invention réside dans la constitution du sabot métallique 264.

Le sabot métallique 264 est constitué de pièces métalliques et comporte une ferrure 266 métallique comportant une première palette amont 268a et une première palette latérale 268b formant un L. La ferrure 266 est fixée dans le coin 214 et chaque première palette 268a-b s'appuie contre un des flancs du coin 214. Les deux premières palettes 268a-b sont globalement verticales, la première palette amont 268a dans un plan globalement parallèle à l'axe longitudinal X et la première palette latérale 268b dans un plan globalement parallèle à l'axe transversal Y. La première palette amont 268a s'étend de l'arête du coin 214 vers l'amont et la première palette latérale 268b s'étend de l'arête du coin 214 vers l'extérieur.

La ferrure 266 comporte également une deuxième palette inférieure 270a et une deuxième palette supérieure 270b. La deuxième palette inférieure 270a s'étend perpendiculairement aux premières palettes 268a-b et est solidaire des bords inférieurs de celles-ci. La deuxième palette supérieure 270b s'étend perpendiculairement aux premières palettes 268a-b et est solidaire des bords supérieurs de celles-ci. Les deux deuxièmes palettes 270a-b sont globalement horizontales.

Le sabot métallique 264 comporte également une languette 272 métallique et souple (vue en transparence sur la Fig. 2) qui présente une extrémité amont qui est fixée et une extrémité aval qui est libre, c'est-à-dire qu'elle n'est pas fixée.

Dans le mode de réalisation de l'invention présenté sur les Figs. 2 et 3, l'extrémité amont est fixée par des vis à la structure du pylône 16 mais dans un autre mode de réalisation, elle pourrait être fixée à la première palette amont 268a en prolongeant cette dernière vers l'amont. L'extrémité amont est fixée en amont de la ferrure 266.

L'extrémité aval vient en appui contre un élément de la zone d'accrochage 200 qui est déporté vers l'extérieur par rapport à la première palette amont 268a, c'est-à-dire que l'extrémité aval est déportée vers l'extérieur par rapport au plan contre lequel l'extrémité amont est fixée. Ce déportement contraint la position de la languette 272 qui prend une forme arquée dont le centre de courbure se trouve en amont et sur l'extérieur par rapport à la languette 272.

Le joint longiligne 262 présente une extrémité 263 qui vient en appui contre la face de la languette 272 orientée vers l'extérieur, ce qui exerce une pression sur la languette 272 et la repousse vers le coin 214 et assure un bon contact entre le joint longiligne 262 et la languette 272. La mise en butée de l'extrémité aval de la languette 272 empêche tout enfoncement de cette extrémité aval et son écartement du capot d'inversion de poussée 210.

Comme le montre la Fig. 3, la languette 272 est prévue pour présenter, entre l'extrémité amont et l'extrémité aval, une partie intermédiaire qui est disposée entre la deuxième palette inférieure 270a et la deuxième palette supérieure 270b.

Un tel agencement permet d'assurer une barrière à la propagation de flammes voulant progresser depuis la turbomachine vers le pylône 16 en créant des chicanes. En outre, la souplesse de la languette 272 lui permet de venir en appui sur l'extérieur contre le capot d'inversion de poussée 210 et d'absorber les mouvements de la nacelle 12.

Pour assurer une meilleure protection contre la propagation des flammes au niveau de l'extrémité aval de la languette 272 entre le capot d'inversion de poussée 210 et la ferrure 266, la languette 272 présente une plaque inférieure 274a et une plaque supérieure 274b qui sont métalliques et solidaires de l'extrémité aval par exemple par rivetage.

La plaque inférieure 274a et la plaque supérieure 274b s'étendent parallèlement aux deuxièmes palettes 270a-b et viennent combler les espaces pouvant exister entre le capot d'inversion de poussée 210 et la ferrure 266, et plus particulièrement les deuxièmes palettes 270a-b.

La plaque supérieure 274b s'étend depuis l'extrémité aval contre la face inférieure de la deuxième palette supérieure 270b, c'est-à-dire à l'intérieur de la ferrure 266.

La plaque inférieure 274a s'étend depuis l'extrémité aval contre la face supérieure de la deuxième palette inférieure 270a, c'est-à-dire à l'intérieur de la ferrure 266.

Pour assurer la continuité de la protection contre la propagation des flammes avec le premier système de joints 250, le système de joints 260 présente un profilé métallique 290 qui est fixé à la structure interne en particulier à l'élément structurel qui porte la porte d'accès 212.

Dans le mode de réalisation de l'invention présenté sur les Figs. 2 et 3, le profilé métallique 290 constitue également l'élément de la zone d'accrochage 200 qui est déporté et contre lequel vient en appui l'extrémité aval de la languette 272. Mais il est également possible de prévoir qu'un élément structurel du pylône 16, et en particulier l'élément structurel qui porte la porte d'accès 212, constitue l'élément contre lequel vient en appui l'extrémité aval de la languette 272.

Le profilé métallique 290 présente un flanc central 292 qui s'étend entre la plaque inférieure 274a et la plaque supérieure 274b, ainsi que deux flancs latéraux 294a-b, où l'un des flancs latéraux 294a prolonge le flanc central 292 au-delà de la plaque inférieure 274a et où l'autre flanc latéral 294b prolonge le flanc central 292 au-delà de la plaque supérieure 274b.

Entre le flanc central 292 et chaque flanc latéral 294a-b, le profilé métallique 290 présente une encoche dans laquelle se positionne la plaque inférieure 274a ou la plaque supérieure 274b correspondante.

Par l'intermédiaire de son flanc central 292, le profilé métallique 290 s'insère ainsi entre l'extrémité aval de la languette 272 et la première palette amont 268a permettant ainsi de réaliser un barrage à la progression des flammes.

La languette 272, ainsi que les languettes métalliques 252 et le profilé métallique 290 sont avantageusement réalisés en acier à ressort afin d'être souples et d'accepter les déplacements relatifs entre le mât et la nacelle.

## Revendications

1. Système de joints feu (260) prévu pour être positionné dans un coin (214) d'une zone d'accrochage (200) entre une attache moteur arrière (18) et un pylône (16) d'un aéronef (10) comportant un capot d'inversion de poussée (210), le système de joints feu (260) comportant :
- un sabot métallique (264) réalisé avec des pièces métalliques et comportant :
- une ferrure (266) comportant, d'une part, une première palette amont (268a) et une première palette latérale (268b) formant un L destiné à être fixé dans le coin (214), où chaque première palette (268a-b) est destinée à s'appuyer contre un des flancs du coin (214), et, d'autre part, une deuxième palette inférieure (270a) et une deuxième palette supérieure (270b) où la deuxième palette inférieure (270a) s'étend perpendiculairement aux premières palettes (268a-b) et est solidaire des bords inférieurs de celles-ci, et où la deuxième palette supérieure (270b) s'étend perpendiculairement aux premières palettes (268a-b) et est solidaire des bords supérieurs de celles-ci, et
- une languette (272) souple, sous forme arquée et qui présente une extrémité amont destinée à être fixée en amont de la ferrure (266) et une extrémité aval libre destinée à venir en appui contre un élément de la zone d'accrochage (200) déporté vers l'extérieur par rapport à la première palette amont (268a), où une partie intermédiaire de la languette (272), entre l'extrémité amont et l'extrémité aval, est disposée entre la deuxième palette inférieure (270a) et la deuxième palette supérieure (270b), et
- un joint longiligne (262) étant prévu pour être solidaire du capot d'inversion de poussée (210) et dont une extrémité (263) vient en appui contre la languette (272).

2. Système de joints feu (260) selon la revendication 1, **caractérisé en ce que** la languette (272) présente une plaque inférieure (274a) et une plaque supérieure (274b) qui sont métalliques et solidaires de l'extrémité aval, **en ce que** la plaque inférieure (274a) s'étend depuis l'extrémité aval contre la face supérieure de la deuxième palette inférieure (270a) et **en ce que** la plaque supérieure (274b) s'étend depuis l'extrémité aval contre la face inférieure de la deuxième palette supérieure (270b).

3. Système de joints feu (260) selon la revendication 2, **caractérisé en ce qu'**il comporte un profilé métallique (290) qui présente un flanc central (292) qui s'étend entre la plaque inférieure (274a) et la plaque supérieure (274b), et deux flancs latéraux (294a-b), où l'un des flancs latéraux (294a) prolonge le flanc central (292) au-delà de la plaque inférieure (274a) et où l'autre flanc latéral (294b) prolonge le flanc central (292) au-delà de la plaque supérieure (274b).

4. Aéronef (10) comportant une attache moteur arrière (18), un pylône (16), un capot d'inversion de poussée (210), une zone d'accrochage (200) entre l'attache moteur arrière (18) et le pylône (16), délimitée par le capot d'inversion de poussée (210) et présentant un coin (214), et un système de joints feu (260) selon l'une des revendications 1 à 3.

## Patentansprüche

1. System von Brandschutzdichtungen (260), das dazu vorgesehen ist, in einer Ecke (214) einer Befestigungszone (200) zwischen einer hinteren Motorbefestigung (18) und einem Masten (16) eines Luftfahrzeugs (10) angeordnet zu sein, umfassend eine Schubumkehrkappe (210), wobei das Brandschutzdichtungssystem (260) umfasst:
- einen Metallschuh (264), der mit Metallteilen hergestellt ist und umfasst:
- einen Beschlag (266), umfassend einerseits eine erste stromaufwärtige Palette (268a) und eine erste seitliche Palette (268b), die ein L bilden, das dazu bestimmt ist, in der Ecke (214) befestigt zu werden, wobei jede erste Palette (268a-b) dazu bestimmt ist, an eine der Flanken der Ecke (214) angelegt zu werden, und andererseits eine zweite untere Palette (270a) und eine zweite obere Palette (270b), wobei sich die zweite untere Palette (270a) senkrecht auf die ersten Paletten (268a-b) erstreckt und mit den unteren Rändern derselben verbunden ist, und wobei sich die zweite obere Palette (270b) senkrecht auf die ersten Paletten (268ab) erstreckt und mit den oberen Rändern derselben verbunden ist, und
- eine flexible Lasche (272) in gebogener Form, die ein stromaufwärtiges Ende, das dazu bestimmt ist, stromaufwärts zum Beschlag (266) befestigt zu werden, und ein freies stromabwärtiges Ende aufweist, das dazu bestimmt ist, an einem Element der Befestigungszone (200) nach außen in Bezug zur ersten stromaufwärtigen Palette (268a) versetzt zur Anlage zu gelangen, wobei ein Zwischenteil der Lasche (272) zwischen dem stromaufwärtigen Ende und dem stromabwärtigen Ende zwischen der zweiten unteren Palette (270a) und der zweiten oberen Palette (270b) angeordnet ist, und
- eine längliche Dichtung (262), die dazu vorgesehen ist, mit der Schubumkehrkappe (210) verbunden zu sein, und von der ein Ende (263) an der Lasche (272) zur Anlage gelangt.

2. System von Brandschutzdichtungen (260) nach Anspruch 1, **dadurch gekennzeichnet, dass** die Lasche (272) eine untere Platte (274a) und eine obere Platte (274b) aufweist, die metallisch sind und mit dem stromabwärtigen Ende verbunden sind, dass sich die untere Platte (274a) vom stromabwärtigen Ende gegen die Oberseite der zweiten unteren Palette (270a) erstreckt, und dass sich die obere Platte (274b) vom stromabwärtigen Ende gegen die Unterseite der zweiten oberen Palette (270b) erstreckt.

3. System von Brandschutzdichtungen (260) nach Anspruch 2, **dadurch gekennzeichnet, dass** es ein Metallprofil (290) umfasst, das eine zentrale Flanke (292), die sich zwischen der unteren Platte (274a) und der oberen Platte (274b) erstreckt, und zwei seitliche Flanken (294a-b) aufweist, wobei eine der seitlichen Flanken (294a) die zentrale Flanke (292) über die untere Platte (274a) hinaus verlängert, und wobei die andere seitliche Flanke (294b) die zentrale Flanke (292) über die obere Platte (274b) hinaus verlängert.

4. Luftfahrzeug (10), umfassend eine hintere Motorbefestigung (18), einen Masten (16), eine Schubumkehrkappe (210), eine Befestigungszone (200) zwischen der hinteren Motorbefestigung (18) und dem Masten (16), die durch die Schubumkehrkappe (210) begrenzt ist und eine Ecke (214) aufweist, und ein System von Brandschutzdichtungen (260) nach einem der Ansprüche 1 bis 3.

## Claims

1. Fire seals system (260) designed to be positioned in a corner (214) of a region (200) of attachment between a rear engine mount (18) and a pylon (16) of an aircraft (10) comprising a thrust reverser cowl (210), the fire seals system (260) comprising:
- a metal shoe (264) made with metal components and comprising:
- a fitting (266) comprising, on the one hand, an upstream first vane (268a) and a lateral first vane (268b) forming an L intended to be fixed in the corner (214), in which each first vane (268a-b) is intended to press against one of the flanks of the corner (214) and, on the other hand, a lower second vane (270a) and an upper second vane (270b) in which the lower second vane (270a) extends at right angles to the first vanes (268a-b) and is attached to the lower edges thereof, and in which the upper second vane (270b) extends perpendicular to the first vanes (268a-b) and is attached to the upper edges thereof, and
- a flexible tongue (272), in bowed shape and which has an upstream end intended to be fixed upstream of the fitting (266) and a free downstream end intended to come to bear against an element of the attachment region (200) that is offset towards the outside with respect to the upstream first vane (268a), in which an intermediate part of the tongue (272), between the upstream end and the downstream end, is arranged between the lower second vane (270a) and the upper second vane (270b), and
- a longilinear seal (262) designed to be attached to the thrust reverser cowl (210) and of which one end (263) comes to bear against the tongue (272).

2. Fire seals system (260) according to Claim 1, **characterized in that** the tongue (272) has a lower plate (274a) and an upper plate (274b) which are made of metal and attached to the downstream end, **in that** the lower plate (274a) extends from the downstream end against the upper face of the lower second vane (270a) and **in that** the upper plate (274b) extends from the downstream end against the lower face of the upper second vane (270b).

3. Fire seals system (260) according to Claim 2, **characterized in that** it comprises a metal profile (290) which has a central flank (292) which extends between the lower plate (274a) and the upper plate (274b), and two lateral flanks (294a-b), in which one of the lateral flanks (294a) extends the central flank (292) beyond the lower plate (274a) and in which the other lateral flank (294b) extends the central flank (292) beyond the upper plate (274b).

4. Aircraft (10) comprising a rear engine mount (18), a pylon (16), a thrust reverser cowl (210), a region (200) of attachment between the rear engine mount (18) and the pylon (16), which region is delimited by the thrust reverser cowl (210) and has a corner (214), and a fire seals system (260) according to one of Claims 1 to 3.
